# EUROPEAN PATENT APPLICATION

(11) **EP 1 885 153 A1**
(43) Date of publication of application: **06.02.2008**
(21) Application number: 06300844.5
(22) Date of filing: 01.08.2006
(51) Int. Cl.: H04Q 11/04

(54) **Flexible equipment and link redundancy scheme for a media gateway**

(71) Applicant: Alcatel Lucent, 75008 Paris (FR)
(72) Inventor: Waitzmann, Carsten, D-70806, Kornwestheim (DE)
(74) Representative: Rausch, Gabriele

(57) **Abstract**

The invention concerns a gateway for interconnecting networks comprising interface units (MIM) and processing units (CIM/PIM), where the interface units (MIM) and the processing units (CIM/PIM) are interconnected by a connection means (MIDPLANE) and where the gateway comprises a spare interface unit and a spare processing unit (S) for redundancy, where the interface units and the processing units comprising control means (Ctrl/OBC) for routing a data path via the connection means providing a variable independent 1 +1 link protection and a variable 1 +1/N+1 independent equipment protection, and in that the interface units comprise additional interfaces for handling link failures. The invention also concerns a method to operate the gateway, where a link failure or an equipment failure is configured to protected N+ 1 by spare interface units and spare processing units (S), by providing a variable independent 1 + 1 link protection and a variable 1 + 1 /N+ 1 independent equipment protection by integrating an additional spare interface unit or an additional processing module per N operating interface units and N operating processing units and by routing link failures via additional interfaces of the interface units (MIM). And the invention concerns the interface unit and the processing unit.

## Description

The invention relates to a free configurable media gateway, an interface unit, a processing unit and a method for providing a configurable reliability of a gateway function.

Media gateways within Next Generation Networks (NGN) are interconnecting circuit switched and packet switched domains, whereas each domain is making use of different transmission technologies, like Synchronous Digital Hierarchy SDH, Synchronous Optical Network (SONET) or Ethernet. Furthermore stringent system availability and reliability requirements are to be met. Thus special attention has to be given to link redundancy schemes, like the linear link protection schemes, e.g. according to ITU-T G.783 and G.8031/Y.1342, as well as equipment redundancy schemes.

Moreover, it is preferable that link protection and equipment protection operate fully independent from each other, to ensure that both schemes can switch independently from each other and that, in case one protection scheme is temporarily unavailable, the other scheme is not impacted in its operation.

There are known equipment protection schemes e.g. 1+1, i.e. one active replaceable equipment item is protected by one standby item, or N+1, i.e. N active replaceable equipment items are protected by one standby item. An advanced software redundancy concept for streamed media is e.g. known from the European Patent Application No. 05290650.

The above mentioned protection schemes and the arrangement is disclosed in the European Patent Publication No. 1 578 167. There one can find a telecommunication switch handling SDH signals transmitted by a protection SDH link associated to a working SDH link of a SDH hardware interface of the telecommunication switch. The telecommunication switch comprises a plurality of SDH hardware interfaces, each comprising working link connecting means, being designed to be connected to a working SDH link and protection link connecting means, being designed to be connected to a protection SDH link associated to the working SDH link of the SDH hardware interface, wherein to each of said SDH hardware interfaces a SDH termination module is connected, and an equipment protection arrangement, comprising a protection switching hardware module and a spare SDH termination module. Each of said SDH hardware interfaces is connected to said equipment protection arrangement by a first SDH connection and a second SDH connection, and the protection SDH link of a first SDH hardware interface of said SDH hardware interfaces is connected to a second SDH hardware interface of said SDH hardware interfaces. The second SDH hardware interface is being designed to forward protection SDH signals transmitted by said protection SDH link of said first SDH hardware interface to said equipment protection arrangement using its first SDH connection and said equipment protection arrangement is being designed to switch said protection SDH signals to said spare SDH termination module or the SDH termination module being connected to said first SDH hardware interface according to a protection switching control signal.

It is of interest to provide flexibility by supporting 1 +1 as well N+1 equipment protection schemes in a variable manner, e.g. to allow extensions scenarios from 1 + 1 to N+ 1 or to execute a re-arrangement from N+ 1 to 1+1 in the context of operation and maintenance activities. The disclosed link and/or equipment protection architecture is suited to solve these requirements in an efficient way.

This is solved by a gateway for interconnecting networks comprising interface units (MIM) and processing units (CIM/PIM), where the interface units (MIM) and the processing units (CIM/PIM) are interconnected by a connection means (MIDPLANE) and where the gateway comprises a spare interface unit and a spare processing unit (S) for redundancy, where the interface units and the processing units comprising control means (Ctrl/OBC) for routing a data path via the connection means providing a variable independent 1 +1 link protection and a variable 1 +1/N+1 independent equipment protection, and in that the interface units comprise additional interfaces for handling link failures.

The problem is solved inter alia by an interface unit (MIM) for the gateway, that is adapted to provide a variable independent 1 + 1 link protection and a variable 1 +1/N+1 independent equipment protection and in that the interface units comprise additional interfaces for handling link failures.

The problem is solved inter alia by a processing unit that is adapted to provide a variable independent 1+1 link protection and a variable 1+1/N+1 independent equipment protection.

And the problem is solved by a method to operate the gateway, where a link failure or an equipment failure is configured to protected N+1 by spare interface units and spare processing units (S), by providing a variable independent 1 +1 link protection and a variable 1 + 1/N+ 1 independent equipment protection by integrating an additional spare interface unit or an additional processing module per N operating interface units and N operating processing units and by routing link failures via additional interfaces of the interface units.

In other words: this invention is based on a midplane system architecture principle. A interface unit, i.e. a card interfacing to a network, i.e. a media interface module provides an interface to a network. Another unit is a kind of streaming processor e.g. in the packet or circuit domain. This unit is e.g. a packet interface module or circuit interface module. The media interface module and the packet or circuit interface module is separated through or better connected via a midplane. This midplane provides connectivity between connectivity modules and processing modules, for front end side data paths, and for front and side control path for 1 + 1 equipment protection scheme and line protection scheme and N+1 equipment protection scheme.

The invention is related to a interface design, which is capable to operate as:
- Interface module for 1 + 1 equipment protection scheme configuration (active/standby card), supporting a 1 + 1 line protection scheme. Interconnections for equipment protection scheme / line protection scheme are realized through the midplane.
- Interface module for N+1 equipment protection scheme configuration (active/standby card), supporting a 1 + 1 line protection scheme. Interconnections for LPS are realized through the Midplane. Interconnections for EQUIPMENT PROTECTION SCHEME are realized through external cabling.
- Interface module for various transmission types.

The invention solves the technical problem to provide a mechanism that enables a high density system architecture and fulfills the requirements of a smooth density increase, i.e. an extensibility going from 1 + 1 equipment protection scheme to N+1 equipment protection scheme.

This will allow a significantly increase of the overall system capacity and performance. The number N shall be driven by the keeping an already existing mid-plane architecture, thus providing the capability to introduce this invention in a running system, onsite and online.

The flexibility of re-arrangements from/to 1 + 1 to/from N+ 1 is ensured in advance.

The principle of independent equipment protection schemes and/or link protection schemes independence is ensured as well and assures a high reliability probability.

The invention is interface independent, i.e. the solution is applicable for any transmission type, like SDH/SONET or the aforementioned Ethernet.

N needs to be flexible and is only driven by #ports per interface module / #active port per x interface modules (any interface module).
Example: #ports per interface module = 16 / #active port per x interface
module = 4 => N=4
#ports per interface module = 16 / #active port per x interface
module = 1 => N=16

A major improvement is the support of 1 + 1 equipment protection scheme configurations and N+1 equipment protection scheme configurations with and on the same hardware, as well as the support of equipment protection scheme re-arrangement from 1+1 to N+ 1 and vice versa.

The invention provides the protection for multiple transmission types, i.e. is really transmission type independent. And equipment protection scheme /link protection scheme are really independent.

In the prior art midplane design provides usually a high switching capacity and is enhanced with reliability features. Recent midplane designs support N+1 protection for several modules without using up any of front user slots and while continuing to support existing modules.

The invention supports a more flexible system configuration, i.e. the same equipment /hard ware elements could be used for 1 +1 and N+1 configurations. There is a single equipment type for active/standby cards as well as different interface types. For 1 + 1 as well as N+ 1, fully independence of EPS and LPS is ensured. 1 + 1 enables shortest take over times as standby card can be used as "hot standby". Configuration tasks during switch-over are minimized. N+1 enables high density system configurations. Multiple redundancy groups, consisting of 1 or N active cards and 1 standby card, are controlled through a midplane control bus. Multiple redundancy groups are supported and they can act independent of each other. Without exchanging hardware, re-arrangement between 1 +1 and N+1 configurations is supported.

Exchangeable interface modules are used to support various interface types, as well as cost efficient dummy elements, e.g. if required for 1 + 1 configurations, thus keeping the costs at a minimum.

The invention is described in the following using
Fig. 1 shows an 1 + 1 and an N+ 1 protection midplane architecture of a gateway according to the invention
Fig. 2 shows a n+ 1 (n=4) configuration of a gateway according to the invention
Fig. 3 shows a link failure scenario in the 1+1 line protection scheme configuration (N+1 equipment protection scheme) of a gateway according to the invention
Fig. 4 shows an equipment failure (media interface module card) scenario in the 1 + 1 line protection scheme configuration of a gateway according to the invention
Fig. 5 showing shows an equipment failure scenario in a N+1 configuration of a gateway according to the invention
Fig. 6 showing shows a link and an equipment failure scenario in a N+1 equipment protection scheme, 1 + 1 line protection scheme configuration of a gateway according to the invention

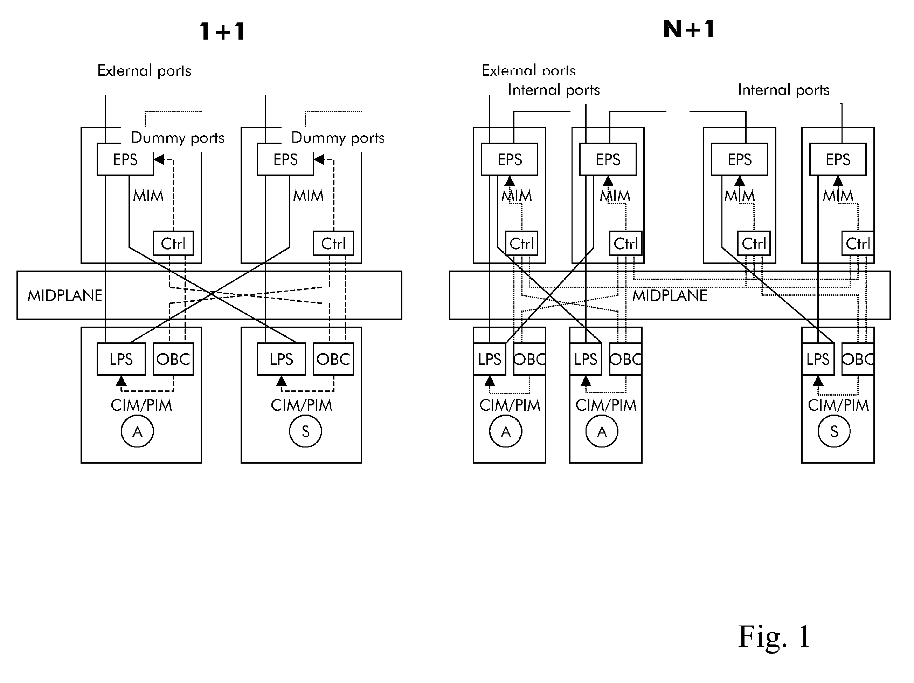

The shown gateway(s) in Fig. 1 comprises media interface modules MIM, and packet interface modules PIM and circuit interface modules CIM. A media interface module MIM comprises an equipment protection subsystem EPS and a control component Ctrl. The packet interface modules PIM and a circuit interface modules CIM comprises (each) an on board controller OBC and a link protection subsystem LPS. The controllers OBC and Ctrl control the equipment protection subsystem EPS and the link protection subsystem LPS on the same module which is shown by dashed arrows. A media interface module MIM has external interfaces and internal interfaces. These interfaces that are not connected to the midplane.

In the 1 +1 protected gateway (left hand side) the midplane connects the equipment protection subsystems EPS with the link protection subsystems and the controller components Ctrl with the on board controllers OBC. The control paths of the 1 +1 equipment protected device are shown by dashed lines; the data paths are shown by solid lines. In the 1 +1 protected gateway the internal interfaces are not used.

In the N+1 protected gateway each control component Ctrl of a media interface module is connected by three ports. The media interface modules MIM and the packet interface modules PIM and circuit interface modules CIM are grouped pair-wise. The control paths and the data paths are connected by the midplane as in the 1 + 1 protected gateway. The remaining data port is connected via the midplane to spare modules. The spare modules are two media interface modules MIM and a packet interface module PIM / circuit interface modules CIM. The redundant data path is connected over the internal interface of a media interface module MIM, i.e. in case that a equipment protection is necessary the equipment protection subsystem EPS will establish a data path to the corresponding spare media interface module MIM.

Active modules are labeled by an "A" where spare modules are labeled by an "S".

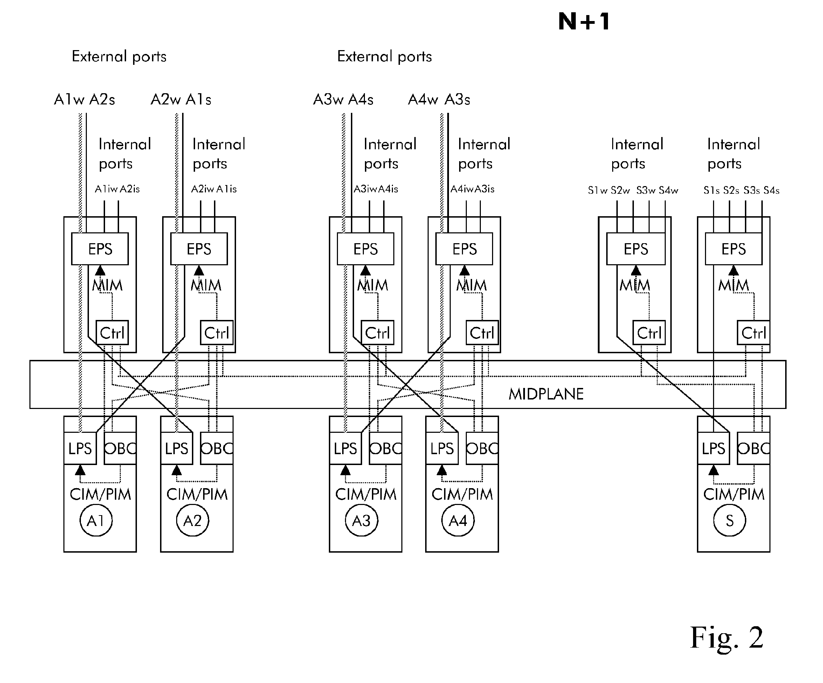

In the following the failure scenarios are itemized: Fig. 2 shows the nominal operational state. The packet interface modules PIM / circuit interface modules CIM are labeled by A1, A2, A3, A4. There corresponding external interface ports are labeled by A1w, A2w, A3w, A4w (normal) and by A1s, A2s, A3s, A4s (protection). Each equipment protection subsystem has two internal ports labeled by A1iw, A2iw, A3iw, A4iw (normal) and A1is, A2is, A3is, A4is (protection).

In a nominal operation state the data path is routed from the normal external interface port Aiw of the media interface module MIM to the associated packet interface modules PIM / circuit interface modules CIM via the mid plane.

The two spare media interface modules MIM have four internal ports S1w, S2w, S3w, S4w. Thus these modules are identical to any other media interface module MIM.

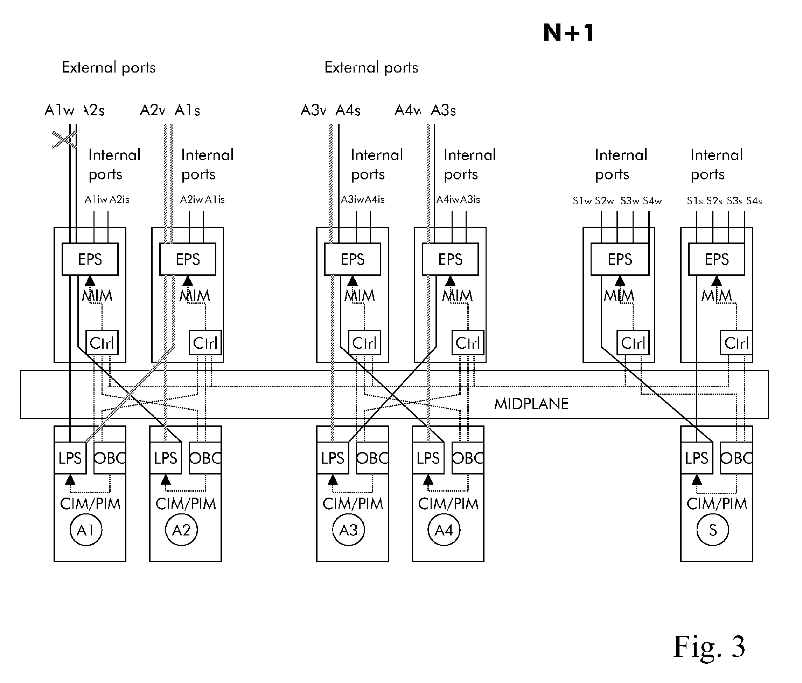

Fig. 3 shows a link failure concerning the data path over port Alw. This data path is protected by the protection port A1s of the associated pair media interface module MIM A2. The data path is routed via the midplane to the corresponding packet interface modules PIM / circuit interface modules CIM. This is shown by bold face data paths.

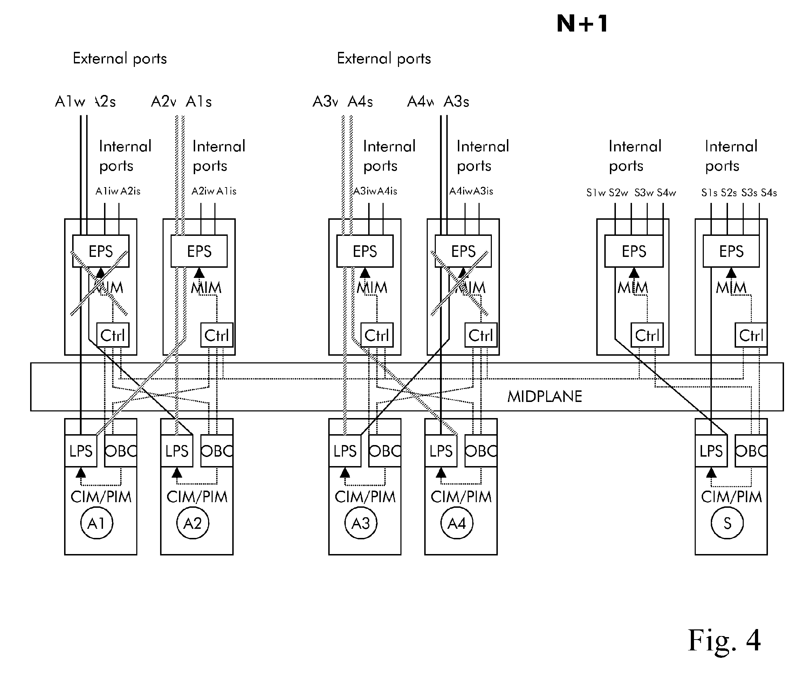

Fig. 4 shows the active data paths in case of a failure of a media interface module MIM. Then similarly the protection ports as shown in Fig. 3 are chosen. Obviously each pair media interface modules MIM protects the hardware of its pair media interface modules MIM.

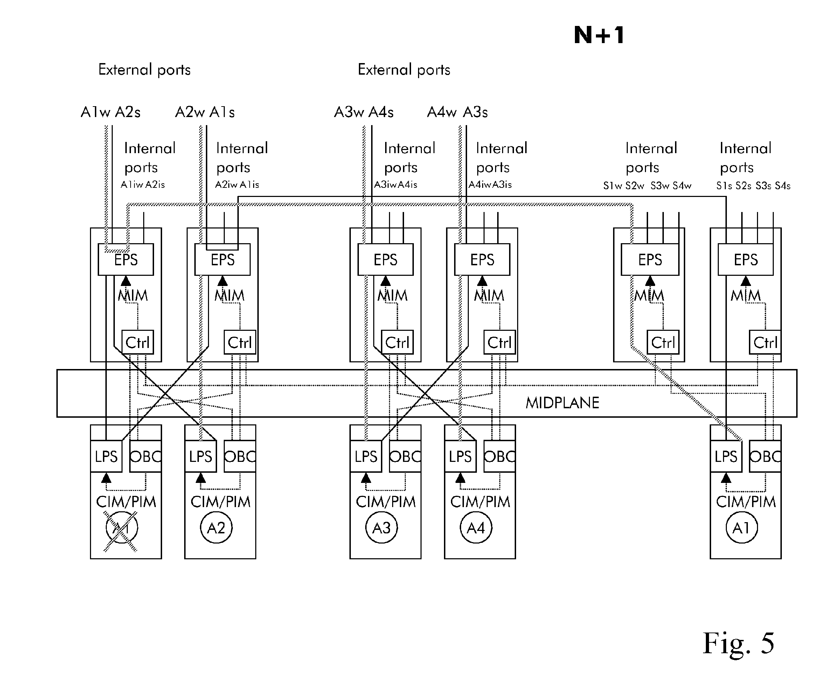

Fig. 5 shows the more complex active data path in case of an equipment failure of a packet interface modules PIM / circuit interface modules CIM. The internal ports are wired such that
- A1iw and S1w: A2iw and S2w
- A1 is and S1s: A2is and S2s
- A3iw and S3w: A4iw and S4w
- A3is and S3s: A4is and S4s
is connected. That allows in the shown scenario to establish an active data path over one of the two spare media interface modules MIM to the spare packet interface modules PIM / circuit interface modules CIM for taking over the functionality of the failed packet interface modules PIM / circuit interface modules CIM A1.

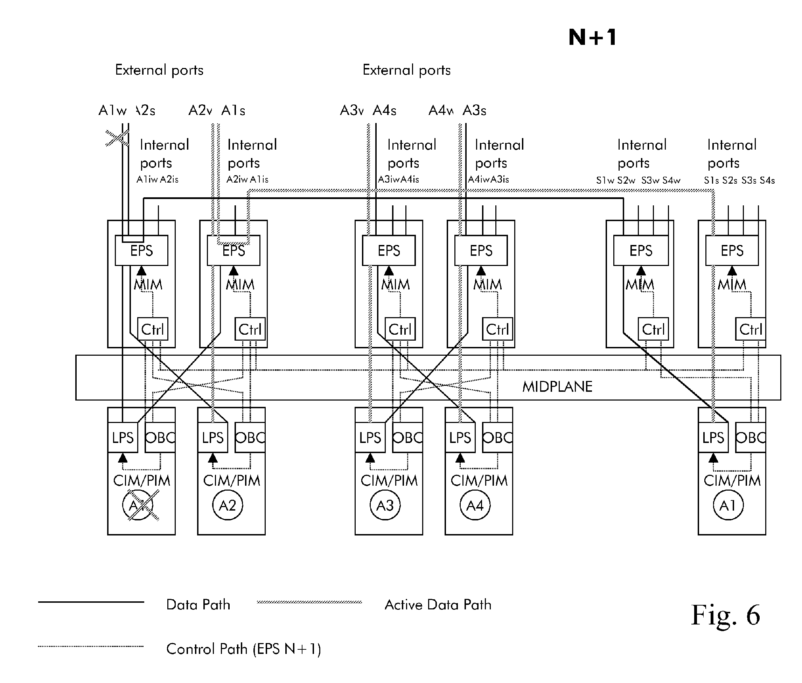

Fig. 6 shows a scenario where a link failure and two equipment failures are commonly protected. Suppose the media interface module MIM A1 , the link to A1w, and the associated packet interface modules PIM / circuit interface modules CIM A1 is broken. Then the two above described protection schemes compensate all failures. The data path is routed from the protecting interface port A1s to the second spare media interface module, through the mid plane to the spare packet interface modules PIM /circuit interface modules CIM. This is shown as above by the bold face path.

The scenarios show an active link protection scheme for a single link failure. The link and equipment protection is independent, since only the associated media interface module MIM A1 switchover the link.

Similarly a media interface module MIM failure is compensates, also independently.

If an equipment protection is active the protection schemes remain independent. Only a new spare media interface module becomes active. There is no link switchover.

A similar argument is valid in case of a dual link and equipment protection.

## Claims

1. A gateway for interconnecting networks comprising interface units (MIM) and processing units (CIM/PIM), where the interface units (MIM) and the processing units (CIM/PIM) are interconnected by a connection means (MIDPLANE) and where the gateway comprises a spare interface unit and a spare processing unit (S) for redundancy, **characterized in that** the interface units and the processing units comprising control means (Ctrl/OBC) for routing a data path via the connection means providing an independent 1 +1 link protection and an 1 + 1 or N+ 1 independent equipment protection, and **in that** the interface units comprise additional interfaces for handling link failures.

2. The gateway according to claim 1, where the connection means comprises a midplane connecting groups of interface units and processing units by a control and a data mesh, and where a spare interface unit and a spare processing unit is integrated by means of a mesh.

3. The gateway according to claim 1, where the spare processing units and the spare interface units are shared.

4. An interface unit (MIM) for a gateway according to claim 1, **characterized in that** the interface unit is adapted to provide an independent 1+1 link protection and an 1+1 or N+1 independent equipment protection and **in that** the interface units comprise additional interfaces for handling link failures.

5. The interface unit according to claim 4, **characterized by** comprising internal interface for interconnecting to spare interface units and connection means to establish a connection to a processing unit, where the interface unit comprising a protection subsystem.

6. A processing unit (CIM/PIM) for a gateway according to claim 1, **characterized in that** the processing unit is adapted to provide an independent 1+1 link protection and an 1+1 or N+1 independent equipment protection.

7. The processing unit according to claim 4, **characterized by** comprising connection means to establish a connection to an interface unit, where the processing unit comprising a protection subsystem.

8. A method to operate a gateway according to claim 1, where a link failure or an equipment failure is configured to protected N+1 by spare interface units and spare processing units (S), **characterized by** providing a variable independent 1+1 link protection and a variable 1 + 1 /N+ 1 independent equipment protection by integrating an additional spare interface unit or an additional processing module per N operating interface units and N operating processing units and by routing link failures via additional interfaces of the interface units (MIM).
